# EUROPÄISCHE PATENTSCHRIFT

(11) **EP 1 167 855 B1**
(45) Veröffentlichungstag und Bekanntmachung des Hinweises auf die Patenterteilung: **04.02.2004**
(21) Anmeldenummer: 01115048.9
(22) Anmeldetag: 21.06.2001
(51) Int. Cl.: F16L 25/00

(54) **Steckverbindung zwischen einem ringgewellten Schlauch und einem Glattrohr**
Plug connection between a corrugated hose and an unprofiled pipe
Connexion par fiche entre un tube ondulé et un tube lisse

(30) Priorität: 29.06.2000 DE 10031729
(43) Veröffentlichungstag der Anmeldung: 02.01.2002
(73) Patentinhaber: Witzenmann GmbH, 75175 Pforzheim (DE)
(72) Erfinder: Gehring, Matthias, 75334 Straubenhardt (DE)
(74) Vertreter: Blumenröhr, Dietrich

(56) Entgegenhaltungen:
- DE-A- 19 746 354
- DE-A- 19 811 993
- FR-A- 2 655 126
- US-A- 5 911 443

## Beschreibung

Die Erfindung betrifft eine Steckverbindung zwischen einem ringgewellten Schlauch und einem Glattrohr, wobei mit dem Schlauchende ein das Glattrohr umgebendes Halteelement zum Festhalten des Glattrohres wenigstens mittelbar verbunden und das Glattrohrende von wenigstens einem dem Halteelement in Richtung auf den Schlauch vorgelagerten Dichtungsring umfangen ist, der seinerseits wenigstens mittelbar dichtend mit dem Schlauch in Verbindung steht.

Eine solche Steckverbindung ergibt sich unter anderem aus Montage- oder Revisionsgründen, wenn von einem Medium durchströmte Bauteile bei Ihrer Montage zunächst angeschlossen und dann an Ort und Stelle gebracht, beispielsweise geklappt werden, oder wenn solche Bauteile ausgewechselt bzw. zur Überprüfung oder Wartung aus ihrer Arbeitsposition genommen werden müssen. In allen Fällen muss das genannte Bauteil nach dem Herstellen der Strömungsverbindung noch bewegt werden, weshalb in der Strömungsverbindung der eingangs genannte Wellschlauch als flexibles Element sitzt. Andererseits dient die Steckverbindung der leichten Herstellung der Strömungsverbindung durch einfaches Einstecken des beispielsweise bauteilseitigen Glattrohrendes in das mit dem Wellschlauch verbundene Halteelement so, dass ein dichter Strömungsweg hergestellt ist, ohne dass es dabei noch der Verwendung von Montagewerkzeugen etc. bedürfte.

Für Wellschlauch und Glattrohr finden als Material in der Regel Metall, insbesondere rostfreier Stahl oder Kupfer Verwendung. Je nach den Besonderheiten des Einzelfalles kann hier jedoch auch die Verwendung von Kunststoff ausreichend oder angebracht sein.

Bei bekannten Steckverbindungen ist nun die Anordnung so getroffen, dass das Halteelement zusammen mit dem Dichtungsring in einem Grundkörper beispielsweise aus Messing sitzt, der mit seinem der Einstecköffnung für das Glattrohr abgewandten Ende mit Hilfe einer Überwurfmutter gegen das Schlauchende gespannt ist, wobei diese Schraubverbindung ebenfalls mit Hilfe geeigneter, bekannter Materialien der Abdichtung bedarf und dazu eine entsprechende Ausbildung des Schlauchendes erforderlich macht. Diese zur Eröffnung der Möglichkeit der Steckverbindung gegebene Bauweise ist ersichtlich von Zahl und Umfang der verwendeten Bauteile platz- und kostengreifend, so dass sie bei einem ringgewellten Schlauch als flexibles Verbindungselement, der ja dann an beiden Enden mit einer solchen Steckverbindung ausgestattet sein muss, einen erheblichen Teil der Gestehunqskosten ausmacht.

Dokument FR-A- 2 655 126 offenbart eine Steckverbindung zwischen einem ringgewellten Rohr und einem Glattrohr, wobei ein Halte- und Dichtungselement die beide Rohre fest verbinden.

Aufgabe der Erfindung ist es daher, eine Steckverbindung der eingangs genannten Art dahingehend anders zu gestalten, dass die Zahl der erforderlichen Bauteile und Dichtstellen sowie des dafür erforderlichen Platzes erheblich reduziert, die jeweilige Steckverbindung also deutlich vereinfacht ist, so dass sich eine spürbare Herabsetzung der Gestehungskosten für einen mit Anschlüssen für eine Steckverbindung versehenen Wellschlauch ergibt.

Diese Aufgabe ist erfindungsgemäß dadurch gelöst, dass das Halteelement im Schlauchende angeordnet und von diesem durch gegenseitige formschlüssige Verbindung wenigstens in Axialrichtung gehalten ist, und dass der Dichtungsring in eine neben dem Halteelement gelegene Welle des Schlauches von innen eingesetzt ist.

Diese erfindungsgemäßen Maßnahmen haben die Wirkung, dass nunmehr der vorstehend so bezeichnete, gehäuseförmige Grundkörper entfallen kann einschließlich der zu seiner Befestigung am Schlauchende erforderlichen Überwurfmutter und der mit dieser zusammenhängenden Abdichtungsmittel. Vielmehr werden das Halteelement und der Dichtungsring, für deren Aufnahme bisher der Grundkörper erforderlich war, unmittelbar im Schlauchende angeordnet und dort in der erforderlichen Weise fixiert, so dass nunmehr das Glattrohrende unmittelbar in das so gestaltete Schlauchende eingesteckt werden kann.

Damit ergibt sich durch den erwähnten Fortfall von Bauteilen und deren unmittelbaren Ersatz durch das Material des Schlauchendes selbst eine so erhebliche Einsparung, dass sich die Gestehungskosten für die Erstellung der Steckverbindung auf einen Bruchteil der bisherigen Gestehungskosten reduzieren, ohne dass dafür ein besonders ins Gewicht fallender Aufwand erforderlich wäre. Insbesondere ist aber durch die erfindungsgemäße Steckverbindung auch die Sicherheit bezüglich Dichtheit der Verbindung erhöht, denn diese wird nunmehr nur noch an einer Stelle und allein von dem Dichtungsring gewährleistet im Gegensatz zu der bisher zumindest an zwei Stellen erforderlichen Herstellung einer dichten Verbindung.

Was den Formschluss zwischen Halteelement und Schlauchende betrifft, so können hier grundsätzlich beliebige miteinander korrespondierende Profilierungen von Schlauchende einerseits und Außenkontur des Halteelementes andererseits miteinander in Eingriff gebracht werden. Zweckmäßig ist es jedoch, dass das Halteelement eine im wesentlichen ringgewellte Außenprofilierung in Korrespondenz zur Ringwellung des Schlauches aufweist, wobei vorteilhafterweise der mit dem Halteelement korrespondierende Teil des Schlauchendes in Richtung auf eine Abflachung der Schlauchwellen gestreckt ist.

Zum Einsetzen des Halteelementes in das Schlauchende kann nun beispielsweise so vorgegangen werden, dass das Schlauchende noch etwas aufgeweitet wird, um das Einschieben des Halteelementes zu erlauben. Anschließend kann dann vorgesehen sein, dass das Schlauchende auf das Halteelement aufgepresst ist.

Insbesondere dann, wenn für das Halteelement als Material ein Kunststoff oder dergleichen vorgesehen ist, kann auch von der Möglichkeit Gebrauch gemacht werden, das Halteelement als ein in das Schlauchende.eingespritztes Bauteil auszubilden.

Eine wiederum andere Möglichkeit besteht darin, dass das Halteelement eine einen achsparallelen Spalt bildende Längsschlitzung aufweist und in das Schlauchende bei elastischer Querschnittsverringerung um die Spaltbreite eingeschoben und anschließend durch elastisch rückfedernde Aufweitung eingesprengt ist.

Nach einer wiederum anderen Möglichkeit kann vorgesehen sein, dass das Halteelement aus zwei achsparallel voneinander getrennten Halbschalen besteht, wobei die Trennfugenbreite derart bemessen ist, dass die Halbschalen wenigstens nacheinander in das Schlauchende einsetzbar sind. Der endgültige Sitz dieser Halbschalen ergibt sich dann bei eingestecktem Glattrohr, das verhindert, dass die Halbschalen wieder aus ihrem Formschluss mit dem Schlauchende herausfallen können.

Schließlich kann aber auch vorgesehen werden, dass das Halteelement nach dem Einsetzen in das Schlauchende durch radiale Aufweitung mit diesem in formschlüssige Verbindung gebracht ist. Diese Möglichkeit kommt vor allem für aus Metall bestehende Halteelemente in Frage, die sich nach dem Einsetzen in das Schlauchende durch radiale Aufweitung plastisch verformen lassen, bis sie einen dem Glattrohr entsprechenden freien Innenquerschnitt aufweisen und gleichzeitig mit dem Schlauchende in formschlüssigem Eingriff sind.

In allen Fällen kann vorgesehen sein, dass der formschlüssigen Verbindung zwischen Schlauchende und Halteelement noch ein Kleber zugefügt ist, um hier die Festigkeit der Verbindung noch zu unterstützen.

Was den Dichtungsring betrifft, wird dieser in der Regel vor der Montage des Halteelementes bereits in den Wellschlauch eingesetzt sein, wozu es keiner besonderen Maßnahmen bedarf, da das ringgewellte Profil des Schlauches mit einer geeigneten, neben dem Halteelement positionierten Schlauchwelle bereits die zur Aufnahme des Dichtungsringes erforderliche Kammer bildet.

Was die Ausbildung des Halteelementes betrifft, so gibt es auch hier zahlreiche Möglichkeiten dahingehend, dass das Glattrohrende durch das Halteelement koaxial zum Schlauch geführt und zumindest in gewisser Weise gegen ein unbeab- . sichtigtes Herausrutschen aus dem Halteelement mit diesem verklemmt ist. Nach einer erfindungsgemäßen Bauform hat es sich jedoch als vorteilhaft erweisen, dass das Halteelement ausgehend von einem im Schlauchende sitzenden, über den Umfang geschlossenen axialen Ringabschnitt gleichmäßig über den Umfang verteilt sich axial in Richtung auf den Schlauch erstreckende Haltefinger zur reibschlüssigen Arretierung des Glattrohrendes aufweist. Dabei kann vorgesehen sein, dass die Haltefinger in Grenzen federnd radial beweglich und mit ihren Enden nach radial innen geneigt verlaufend ausgebildet sind. Eine andere Möglichkeit besteht darin, dass der von den Haltefingern im entspannten Zustand umfangende Innendurchmesser um ein im Sinne der Erzeugung ausreichende Haltekräfte vorherbestimmtes Maß kleiner als der Außendurchmesser des Glattrohrendes ist. In beiden Fällen hat dies die Wirkung, dass beim Einstecken des Glattrohrendes die Haltefinger radial federnd aufgespreizt werden und dann unter der so erzeugten Rückfederungskraft auf der Außenseite des Glattrohrendes anliegen, so dass zwischen den Haltefingern und dem Glattrohrende ein ausreichender Reibschluss besteht, um ein unbeabsichtigtes oder zu leichtes Herausrutschen des Glattrohrendes aus dem Haltelement zu verhindern.

Nach einer anderen Bauform kann jedoch auch vorgesehen sein, dass das Halteelement eingesetzt einen Federring mit gleichmäßig über den Umfang verteilten, sich in Richtung auf den Schlauch schräg nach radial innen erstreckenden Federzungen aufweist, und dass der von den freien Enden der Federzungen umschriebene Querschnitt geringer als der Außenquerschnitt des Glattrohres ist. Auch hier werden beim Einstecken des Glattrohrendes zunächst die Federzungen nach radial außen aufgespreizt, bis unter ihnen der Durchtritt des Glattrohrendes möglich ist. Durch die Schrägstellung der Federzungen verhaken sich aber dann deren freie Stirnkanten mit der Außenfläche des Glattrohrendes, so dass dessen Herausziehen aus dem Halteelement praktisch nur noch unter Gewaltanwendung möglich ist. Um diese Wirkung zu erzielen, ist es besonders zweckmäßig, wenn der Federring aus Federstahlblech besteht.

Bezüglich der Ausbildung und Anordnung des Federringes im einzelnen kann vorgesehen sein, dass die Federzungen von einem im wesentlichen hohlzylindrischen, sich achsparallel erstreckenden Tragteil des Federringes ausgehen, und dass das Tragteil im Halteelement verankert ist. Hierzu kann beispielsweise das Halteelement aus zwei ringförmigen Teilen bestehen, die unter Zwischensetzen des Tragteils des Federringes zusammensteckbar sind. Besteht das Halteelement aus einem Kunststoffteil, so besteht auch die Möglichkeit, das Tragteil des Federringes bei der Herstellung des Kunststoffteiles mit einzuspritzen.

Die vorbeschriebene Halterung für das Glattrohrende stellt, wie gesagt, zunächst eine an sich unlösbare Steckverbindung dar. Will man diese als beispielsweise für den Austausch des angeschlossenen Bauteiles lösbare Steckverbindung ausbilden, so ist es zweckmäßig, dass der zwischen Federzungen und einsteckseitigem Ende des Halteelementes gelegene Halteelementenabschnitt eine Vergrößerung seines Innenquerschnittes zur Aufnahme einer darin axial verschiebbaren, hohlzylindrischen Entriegelungshülse mit einem dem Außendurchmesser des Glattrohres entsprechenden Innendurchmesser aufweist, dass die Entriegelungshülse das Schlauchende nach außen mit ihrem einen Ende überragt, und dass durch das andere Ende der Entriegelungshülse bei deren Axialverschiebung die Federzungen radial nach außen schwenkbar sind. Hier kann also zum Lösen der Steckverbindung die Entriegelungshülse etwas in Richtung auf den Schlauch verschoben werden, wodurch sie mit ihrem anderen Ende die Federzungen radial aufspreizt und damit gegenüber dem Glattrohrende außer Eingriff bringt, so dass nunmehr das Glattrohrende bei gegen Axialverschiebung festgehaltener Entriegelungshülse aus der Steckverbindung herausgezogen werden kann.

Um hier die Betätigung zu erleichtern, ist es vorteilhaft, dass das eine Ende der Entriegelungshülse eine Handhabe in Form eines sich radial nach außen erstreckenden, vom Schlauchende axial beabstandeten Bundes aufweist. Ein solcher Bund ist aber im übrigen für das freie Ende des Halteelementes grundsätzlich ratsam als Schutz gegenüber dem oft scharfkantig ausfallenden Schlauchende.

Andererseits kann vorgesehen sein, dass die Entriegelungshülse neben ihrem anderen Ende eine nach radial außen vorstehenden Rastnase aufweist und der zugeordnete Halteelementenabschnitt eine daran angepasste, sich bis an die Federzungen erstreckende Ausnehmung, um ein unbeabsichtigtes axiales Herausrutschen der Entriegelungshülse aus dem Halteelement zu verhindern. Hier kann im übrigen zur Vereinfachung der Bauform vorgesehen sein, dass Rastnase und Ausnehmung umlaufend ausgebildet sind.

Wie bereits angedeutet, besteht die Möglichkeit, dass das Halteelement und gegebenenfalls die Entriegelungshülse aus Kunststoff bestehen, also ein billiges, leicht herzustellendes Bauteil sind. Je nach den Anforderungen des Einzelfalles kann jedoch auch vorgesehen werden, dass wenigstens das Halteelement aus Edelstahl oder Messing besteht. Was den dem Halteelement vorgelagerten Dichtungsring betrifft, so kann hier ein in beliebigen Größen am Markt erhältlicher und damit billiger O-Ring Verwendung finden.

Schließlich ergibt sich noch die Frage, wie sichergestellt werden kann, dass das Glattrohrende soweit in die Verbindung eingesteckt wird, dass sein Vorderende auch in ausreichendem Maße durch den Dichtungsring geschoben ist. Dies kann in einfacher Weise dadurch geschehen, dass das Glattrohr im entsprechenden Abstand zu seiner Stirnkante mit einer über seinen Umfang verlaufenden Markierung ausgestattet wird, deren Positionierung an der Öffnungskante des Schlauches bzw. des Halteelementes dann eine ausreichende Einstecktiefe anzeigt. Aus Sicherheitsgründen kann jedoch auch vorgesehen werden, dass dem Dichtungsring in Richtung auf den Schlauch ein Anschlagring aus Metall oder Kunststoff für das Glattrohr vorgelagert ist, und dass der Anschlagring in eine neben dem Dichtungsring gelegene Welle des Schlauches von innen eingesetzt ist. Dieser Anschlagring, dessen Innendurchmesser zweckmäßig im Bereich des Innendurchmessers des Glattrohres liegt, bildet dann eine spürbare Grenze beim Einstecken des Glattrohres, die auf der anderen Seite anzeigt, dass nunmehr das Glattrohrende im vorderen Bereich mit Sicherheit ausreichend innerhalb des Dichtungsringes sitzt.

Weitere erfindungswesentliche Merkmale und Einzelheiten ergeben sich aus der nachfolgenden Beschreibung von Ausführungsformen, die auf der Zeichnung dargestellt sind. In der Zeichnung zeigen:
- Figur 1: ein Schlauchende mit einer ersten Ausführung einer Steckverbindung im axialen Halbschnitt;
- Figur 2: die Einzelheit II aus Figur 1;
- Figur 3: den Gegenstand gemäß Figur 1 mit eingestecktem Glattrohrende und
- Figur 4: ein Schlauchende mit einer zweiten Bauform einer Steckverbindung im axialen Halbschnitt.

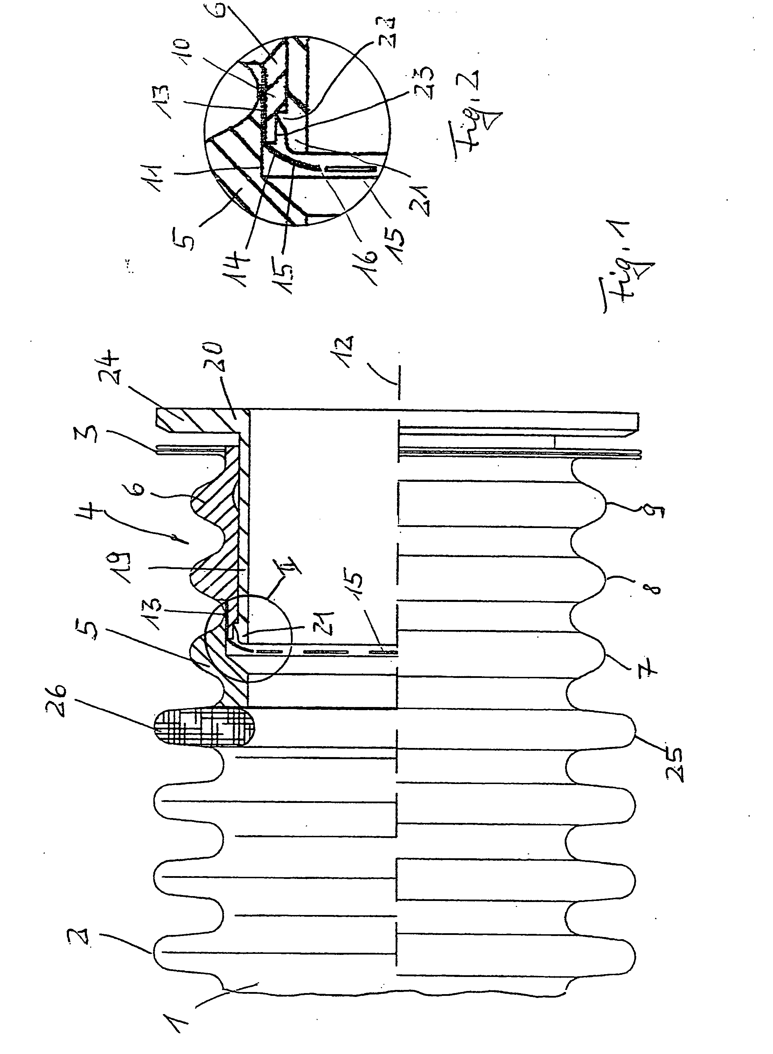

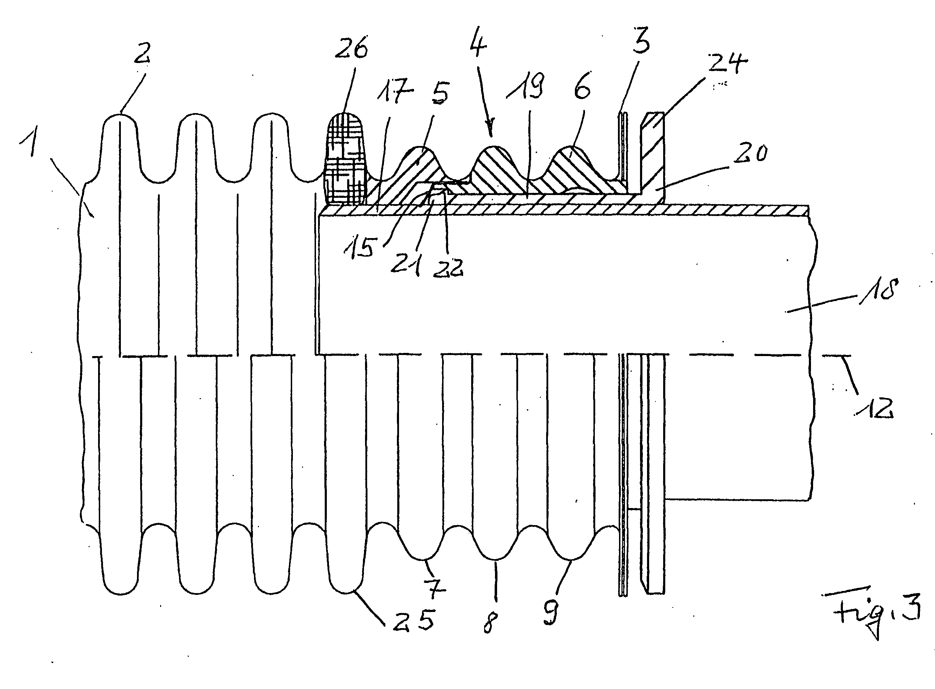

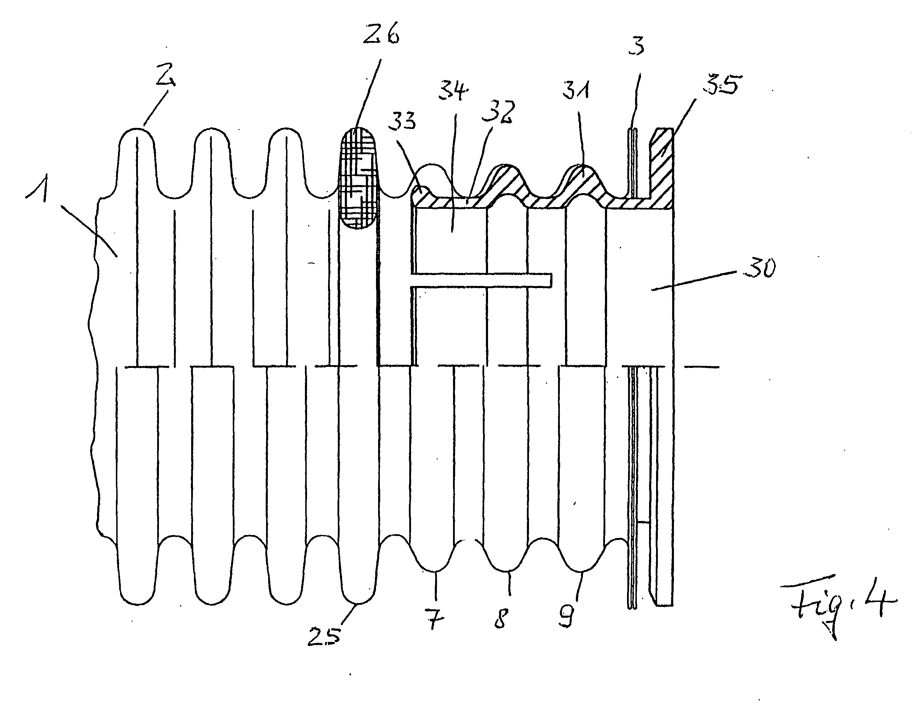

Die Figuren 1 und 3 zeigen ein Ende eines Schlauches 1 beispielsweise aus Metall mit Ringwellen 2, deren beiden das Schlauchende abschließenden Wellen zu einem Bund 3 axial zusammengestaucht sind.

In das Schlauchende eingesetzt und mit diesem über seine Außenkontur formschlüssig verbunden ist ein Halteelement 4 beispielsweise aus Kunststoff, das aus axial aneinander anschließenden, ringförmigen Halteelementeabschnitten 5 und 6 besteht. Das Halteelement 4 bildet über seine Abschnitte 5 und 6 eine ringgewellte Außenkontur, auf die das Ende des Schlauches 1 mit entsprechend geformten Ringwellen 7, 8, 9 aufgepresst ist, wobei diese Ringwellen 7 bis 9 einen flacheren und damit gestreckteren Verlauf aufweisen als die übrigen Ringwellen 2 des Schlauches 1. Dabei kann die Montage des Halteelementes 4 dadurch geschehen, dass das Schlauchende zunächst radial aufgeweitet wird, bis sich das Halteelement 4 axial einschieben lässt. Danach kann dann das Schlauchende mit Hilfe geeigneter Radialspannmittel bis zu der aus Figur 1 ersichtlichen Form wieder radial zusammen und auf die Außenkontur des Halteelements 4 gepresst werden.

Wie besser aus der Ausschnittvergrößerung gemäß Figur 2 ersichtlich, ist die Stoßstelle der Halteelementenabschnitte 5, 6 derart ausgebildet, dass der Halteelementeabschnitt 6 mit einem umlaufenden Bund 10 in eine entsprechende, umlaufende Ausnehmung 11 des Halteelementeabschnittes 5 ragt.

Eingelegt in diese Verbindung ist ein hohlzylindrisches, sich parallel zur Achse 12 erstreckendes Tragteil 13 eines Federringes 14, von dem gleichmäßig über den Umfang verteilt sich in Richtung auf den Schlauch 1 schräg nach radial innen erstreckende Federzungen 15 ausgehen, die mit ihren freien Enden 16 einen Querschnitt umschreiben, der geringer als der Außenquerschnitt des Endes 17 eines Glattrohres 18 (siehe Figur 3) ist, das in das Halteelement 4 eingesteckt und von diesem gehalten werden soll. Wie Figur 3 zeigt, werden durch das Einstecken des Glattrohres 18 die Federzungen 15 nach radial außen aufgebogen und setzen sich dann mit ihrer Stirnkante 16 auf dem Mantel des Glattrohres 18 fest, so dass dieses nicht mehr unbeabsichtigt aus dem Halteelement 4 herausgezogen werden kann.

Um trotzdem ein Lösen dieser Rastverbindung zu ermöglichen, ist in einem entsprechend radial erweiterten Innenquerschnitt des Halteelementeteiles 6 eine hohlzylindrische und mit ihrem Innendurchmesser dem Außendurchmesser des Glattrohres 18 entsprechende Entriegelungshülse 19 axial verschiebbar, die über das Schlauchende mit ihrem einen Ende 20 nach außen vorsteht, während durch ihr anderes Ende 21 bei entsprechender Axialverschiebung die Federzungen 15 radial nach außen schwenkbar sind, so dass die Stirnkanten 16 der Federzungen 15 vom Mantel des Glattrohrendes 17 freikommen.

Damit die Entriegelungshülse 19 nicht unbeabsichtigt aus ihrer Position innerhalb des Halteelementeteiles 6 herausrutschen kann, ist deren Ende 21 mit einer nach radial außen vorstehenden, umlaufenden Rastnase 22 versehen (siehe insbesondere Figur 2), die in eine daran angepasste, umlaufende radiale Ausnehmung 23 des Halteelementsteils 6 ragt, wobei diese Ausnehmung 23 in Richtung auf die Federzungen 15 hin offen ist.

Um die Handhabung der Entriegelungshülse 19 zu vereinfachen, weist diese außerdem an ihrem aus dem Schlauchende ragenden Ende 20 eine Handhabe in Form eines sich radial nach außen erstreckenden, vom Schlauchende axial beanstandeten Bundes 24 aus, der gleichzeitig einen Schutz gegenüber dem oft scharfkantigen, durch den Bund 3 gebildeten Schlauchende darstellt.

Neben dem schlauchseitigen Ende des Halteelements 4 ist in die benachbarte Welle 25 des Schlauches 1 ein Dichtungsring 26 in Form eines O-Ringes eingesetzt, in den der vordere Bereich des Glattrohrendes 17 hineinragt und der somit für eine gas- bzw. flüssigkeitssichere Abdichtung zwischen Schlauch 1 und Glattrohr 18 sorgt.

Wie aus den Figuren 1 bis 3 ersichtlich, kann das Glattrohr 18 mit seinem Ende 17 in das Halteelement 4 eingesteckt werden, so lange, bis sein Ende 17 in den Dichtungsring 26 eintaucht, wobei die Entriegelungshülse 19 entgegen der Einsteckrichtung zurückgehalten wird. Beim Einstecken des Glattrohres 18 werden die Federzungen 15 des Federringes 14 radial nach außen geschwenkt und gleiten mit ihren Vorderkanten 16 auf dem Mantel des Glattrohres 18, bis dieses zum Stillstand kommt. Danach stehen die Vorderkanten 16 der Federzungen 15 auf dem Glattrohr auf und halten dieses vermöge der Schrägstellung der Feder 15 gegen unbeabsichtigtes Herausziehen fest.

Soll die so hergestellte Steckverbindung gelöst werden, wird die Entriegefungshülse 19 bezogen auf die zeichnerische Darstellung von rechts nach links geschoben so lange, bis ihre Vorderkante die Federzungen 15 nach radial außen geschwenkt hat. Damit wird das Glattrohr 18 von der Verriegelungswirkung der Federzungen 15 frei und kann aus der Verbindung herausgezogen werden.

Um sicher zu stellen, dass das Glattrohr beim Herstellen der Steckverbindung weit genug eingesteckt wird, um mit seinem Vorderende 17 ausreichend tief im Dichtungsring 26 zu sitzen, kann das Glattrohr 18 in nicht dargestellter Weise an der Stelle mit einer Umfangsmarkierung versehen sein, die bei ordentlich eingestecktem Glattrohrende außen neben dem Bund 24 sitzt. Es besteht jedoch in ebenfalls nicht dargestellter Weise auch die Möglichkeit, in die neben der Welle 25 befindliche Welle des Schlauches 1 einen Anschlagring aus Metall oder Kunststoff beispielsweise in Form eines Sprengringes einzusetzen, dessen Innendurchmesser zweckmäßig dem Innendurchmesser des Glattrohres 18 entspricht und der folglich die Tiefe bestimmt, mit der das Glattrohr 18 in die beschriebene Verbindung eingesetzt werden kann.

Figur 4 zeigt eine abgewandelte Ausführung der Steckverbindung, wobei bereits anhand der Figuren 1 bis 3 beschriebene Gegenstände mit der dort eingeführten Bezifferung versehen und nicht noch einmal beschrieben sind.

Gemäß Figur 4 besteht das Halteelement 30 aus einem formschlüssig im Schlauchende sitzenden und über den Umfang geschlossen umlaufenden axialen Ringabschnitt 31, von dem gleichmäßig über den Umfang verteilt sich axial in Richtung auf den Schlauch 1 erstreckende Haltefinger 32 ausgehen, deren im entspannten Zustand belassener, freier Innenquerschnitt kleiner ist als der Außenquerschnitt des nicht dargestellten Glattrohres. Damit die Haltefinger 32 in Radialrichtung eine geringfügige, federnde Schwenkbewegung ausführen können, sind ihre Vorderenden 33 gegenüber der Wandung des Schlauches 1 frei.

Wird nun in nicht dargestellter Weise ein Glattrohrende in den im wesentlichen dessen Außenquerschnitt entsprechenden Innenquerschnitt des Halteelementes 30 eingesteckt, so werden die Haltefinger 32 geringfügig nach radial außen geschwenkt und legen sich mit ihrer zylindrischen Innenfläche 34 auf den Mantel des Glattrohres, so dass sie das Glattrohr durch den auf diese Weise hergestellten Reibschluss gegen unbeabsichtigtes Herausziehen festhalten.

Andererseits ist diese Verbindung jedoch so gestaltet, dass bei entsprechender Absicht das Glattrohr gegen einen gewissen Widerstand aus der Steckverbindung herausgezogen werden kann, wenn diese aus eingangs im einzelnen beschriebenen Gründen gelöst werden soll. Als Schutz vor Verletzungen dient auch hier wieder ein am Ende des Halteelementes 30 angeformter Bund 35.

Beiden geschilderten Bauformen ist gemeinsam, dass das Halteelement 4 bzw. 30 ein kostengünstiges Kunststoffteil sein kann. Je nach den Umständen des Einzelfalles besteht jedoch auch die Möglichkeit dessen Herstellung aus Metall, beispielsweise rostfreiem Stahl oder Messing.

Der Sitz des Halteelementes innerhalb des Endes des Schlauches 1 ist in der beschriebenen Weise durch Formschluss der Profilierung des Schlauchendes mit einer entsprechenden Profilierung des Halteelementes 4 bzw. 30 gegeben. Um dieser Verbindung noch einen größeren Halt zu geben, gegebenenfalls auch zur Verhinderung eines gegenseitigen Verdrehens zwischen Schlauch 1 und Halteelement 4 bzw. 30, kann der formschlüssigen Verbindung zwischen diesen beiden Teilen noch ein Kleber beigegeben werden.

## Patentansprüche

1. Steckverbindung zwischen einem ringgewellten Schlauch und einem Glattrohr, wobei mit dem Schlauchende ein das Glattrohr umgebendes Halteelement zum Festhalten des Glattrohres wenigstens mittelbar verbunden und das Glattrohrende von wenigstens einem dem Halteelement in Richtung auf den Schlauch vorgelagerten Dichtungsring umfangen ist, der seinerseits wenigstens mittelbar dichtend mit dem Schlauch in Verbindung steht,
**dadurch gekennzeichnet,**
**dass** das Halteelement (4, 30) im Schlauchende angeordnet und von diesem durch gegenseitige formschlüssige Verbindung wenigstens in Axialrichtung gehalten ist, und dass der Dichtungsring (26) in eine neben dem Halteelement (4, 30) gelegene Welle (25) des Schlauches (1) von innen eingesetzt ist.

2. Steckverbindung nach Anspruch 1,
**dadurch gekennzeichnet,**
**dass** das Halteelement (4, 30) eine im wesentlichen ringgewellte Außenprofilierung in Korrespondenz zur Ringwellung (7 bis 9) des Schlauches (1) aufweist.

3. Steckverbindung nach Anspruch 2,
**dadurch gekennzeichnet,**
**dass** der mit dem Halteelement (4, 30) korrespondierende Teil des Schlauchendes in Richtung auf eine Abflachung der Schlauchwellen (7 bis 9) gestreckt ist.

4. Steckverbindung nach einem der Ansprüche 1 bis 3,
**dadurch gekennzeichnet,**
**dass** das Schlauchende auf das Halteelement (4, 30) aufgepresst ist.

5. Steckverbindung nach einem der Ansprüche 1 bis 3,
**dadurch gekennzeichnet,**
**dass** das Halteelement ein in das Schlauchende eingespritztes Bauteil ist.

6. Steckverbindung nach einem der Ansprüche 1 bis 3,
**dadurch gekennzeichnet,**
**dass** das Haltelement eine einen achsparallelen Spalt bildende Längsschlitzung aufweist und in das Schlauchende bei elastischer Querschnittsverringerung um die Spaltbreite eingeschoben und anschließende durch elastisch rückfedernde Aufweitung eingesprengt ist.

7. Steckverbindung nach einem der Ansprüche 1 bis 3,
**dadurch gekennzeichnet,**
**dass** das Halteelement aus zwei achsparallel voneinander getrennten Halteschalen besteht, wobei die Trennfugenbreite derart bemessen ist, dass die Halteschalen wenigstens nacheinander in das Schlauchende einsetzbar sind.

8. Steckverbindung nach einem der Ansprüche 1 bis 4,
**dadurch gekennzeichnet,**
**dass** das Halteelement nach dem Einsetzen in das Schlauchende durch radiale Aufweitung mit diesem in formschlüssige Verbindung gebracht ist.

9. Steckverbindung nach einem der Ansprüche 1 bis 8,
**dadurch gekennzeichnet,**
**dass** der formschlüssigen Verbindung zwischen Schlauchende und Halteelement (4, 30) ein Kleber zugefügt ist.

10. Steckverbindung nach einem der Ansprüche 1 bis 8,
**dadurch gekennzeichnet,**
**dass** das Halteelement (30) ausgehend von einem im Schlauchende sitzenden, über den Umfang geschlossenen axialen Ringabschnitt (31) gleichmäßig über den Umfang verteilt sich axial in Richtung auf den Schlauch (1) erstreckende Haltefinger (32) zur reibschlüssigen Arretierung des Glattrohrendes aufweist.

11. Steckverbindung nach Anspruch 10,
**dadurch gekennzeichnet,**
**dass** die Haltefinger (32) in Grenzen federnd radial beweglich und mit ihren Enden nach radial innen geneigt verlaufend ausgebildet sind.

12. Steckverbindung nach Anspruch 10,
**dadurch gekennzeichnet,**
**dass** der von den Haltefingern (32) im entspannten Zustand umfangene Innendurchmesser um ein im Sinne der Erzeugung ausreichende Haltekräfte vorherbestimmtes Maß kleiner als der Außendurchmesser des Glattrohrendes ist.

13. Steckverbindung nach einem der Ansprüche 1 bis 8,
**dadurch gekennzeichnet,**
**dass** das Halteelement (4) eingesetzt einen Federring (14) mit gleichmäßig über den Umfang verteilten, sich in Richtung auf den Schlauch (1) schräg nach radial innen erstreckenden Federzungen (15) aufweist, und dass der von den freien Enden (16) der Federzungen (15) umschriebene Querschnitt geringer als der Außenquerschnitt des Glattrohres (18) ist.

14. Steckverbindung nach Anspruch 13,
**dadurch gekennzeichnet,**
**dass** die Federzungen (15) von einem im wesentlichen hohlzylindrischen, sich achsparallel erstreckenden Tragteil (13) des Federringes (14) ausgehen, und dass das Tragteil (13) im Halteelement (4) verankert ist.

15. Steckverbindung nach Anspruch 13 oder 14,
**dadurch gekennzeichnet,**
**dass** der Federring (14) aus Federstahlblech besteht.

16. Steckverbindung nach einem der Ansprüche 13 bis 15,
**dadurch gekennzeichnet,**
**dass** der zwischen Federzungen (15) und einsteckseitigem Ende des Halteelementes (4) gelegene Halteelementenabschnitt (6) eine Vergrößerung seines Innenquerschnittes zur Aufnahme einer darin axial verschiebbaren, hohlzylindrischen Entriegelungshülse (19) mit einem dem Außendurchmesser des Glattrohres (18) entsprechenden Innendurchmesser aufweist, dass die Entriegelungshülse (19) das Schlauchende nach außen mit ihrem einen Ende (20) überragt, und dass durch das andere Ende (21) der Entriegelungshülse (19) bei deren Axialverschiebung die Federzungen (15) radial nach außen schwenkbar sind.

17. Steckverbindung nach einem der vorhergehenden Ansprüche,
**dadurch gekennzeichnet,**
**dass** das Halteelement (4) bzw. das eine Ende (20) der Entriegelungshülse (19) einen sich radial nach außen erstreckenden, vom Schlauchende axial beabstandeten Bund (24, 35) aufweist.

18. Steckverbindung nach Anspruch 16 oder 17,
**dadurch gekennzeichnet,**
**dass** die Entriegelungshülse (19) neben ihrem anderen Ende (21) eine nach radial außen vorstehende Rastnase (22) aufweist und der Halteelementenabschnitt (6) eine daran angepasste, sich bis an die Federzungen (15) erstreckende Ausnehmung (23).

19. Steckverbindung nach Anspruch 18,
**dadurch gekennzeichnet,**
**dass** Rastnase (22) und Ausnehmung (23) umlaufend ausgebildet sind.

20. Steckverbindung nach einem oder mehreren der Ansprüche 1 bis 19,
**dadurch gekennzeichnet,**
**dass** das Halteelement (4, 30) und gegebenenfalls die Entriegelungshülse (19) aus Kunststoff bestehen.

21. Steckverbindung nach einem oder mehreren der Ansprüche 1 bis 19,
**dadurch gekennzeichnet,**
**dass** wenigstens das Halteelement (4, 30) aus Edelstahl oder Messing besteht.

22. Steckverbindung nach einem oder mehreren der Ansprüche 1 bis 21,
**dadurch gekennzeichnet,**
**dass** der dem Halteelement (4, 30) vorgelagerte Dichtungsring ein O-Ring ist.

23. Steckverbindung nach einem oder mehreren der Ansprüche 1 bis 22,
**dadurch gekennzeichnet,**
**dass** dem Dichtungsring (26) in Richtung auf den Schlauch (1) ein Anschlagring für das Glattrohr (18) vorgelagert ist, und dass der Anschlagring in eine neben dem Dichtungsring gelegene Welle des Schlauches (1) von innen eingesetzt ist.

## Claims

1. Plug-type connection between a corrugated hose and a plain-ended pipe, wherein a retaining element, which surrounds the plain-ended pipe, is connected at least indirectly to the end of the hose in order to secure the plain-ended pipe, and the end of the plain-ended pipe is embraced by at least one sealing ring which is mounted upstream of the retaining element in the direction of the hose and which is in turn connected at least indirectly to the hose in sealing fashion,
**characterised in**
**that** the retaining element (4, 30) is disposed in the end of the hose and retained by the latter by a mutual positive connection at least in the axial direction, and that the sealing ring (26) is inserted from inside in a corrugation (25), located next to the retaining element (4, 30), of the hose (1).

2. Plug-type connection according to Claim 1,
**characterised in**
**that** the retaining element (4, 30) has a substantially corrugated outer profile to correspond to the corrugations (7 to 9) of the hose (1).

3. Plug-type connection according to Claim 2,
**characterised in**
**that** the part of the end of the hose which corresponds to the retaining element (4, 30) is elongated towards a flattening of the hose corrugations (7 to 9).

4. Plug-type connection according to any one of Claims 1 to 3,
**characterised in**
**that** the end of the hose is pressed onto the retaining element (4, 30).

5. Plug-type connection according to any one of Claims 1 to 3,
**characterised in**
**that** the retaining element is a component which is injected into the end of the hose.

6. Plug-type connection according to any one of Claims 1 to 3,
**characterised in**
**that** the retaining element has an elongate slot, which forms a paraxial gap, and is pushed into the end of the hose with an elastic cross-sectional contraction by the gap width and then sprung in by widening in elastically resilient fashion.

7. Plug-type connection according to any one of Claims 1 to 3,
**characterised in**
**that** the retaining element consists of two retaining shells which are paraxially separate from one another, wherein the separating joint width is dimensioned such that the retaining shells can be inserted in the end of the hose at least one after the other.

8. Plug-type connection according to any one of Claims 1 to 4,
**characterised in**
**that** the retaining element is positively connected to the end of the hose by radial widening after being inserted in the latter.

9. Plug-type connection according to any one of Claims 1 to 8,
**characterised in**
**that** an adhesive is added to the positive connection between the end of the hose and the retaining element (4, 30).

10. Plug-type connection according to any one of Claims 1 to 8,
**characterised in**
**that**, starting from an axial annular portion (31) which is seated in the end of the hose and closed over the circumference, the retaining element (30) has retaining fingers (32), which are uniformly distributed over the circumference and extend axially in the direction of the hose (1), for positively locking the end of the plain-ended pipe.

11. Plug-type connection according to Claim 10,
**characterised in**
**that** the retaining fingers (32) are formed so as to be resiliently mobile within limits in the radial direction and inclined radially inwards with their ends.

12. Plug-type connection according to Claim 10,
**characterised in**
**that** the inside diameter, which is embraced by the retaining fingers (32) in the relaxed state, is smaller than the outside diameter of the plain-ended pipe by an extent which is predetermined for the purpose of producing sufficient retaining forces.

13. Plug-type connection according to any one of Claims 1 to 8,
**characterised in**
**that** the retaining element (4) has an inserted spring lock washer (14) with spring tongues (15) which are uniformly distributed over the circumference and extend abliquely and radially inwards in the direction of the hose (1), and that the cross section which is circumscribed by the free ends (16) of the tongues (15) is smaller than the external cross section of the plain-ended pipe (18).

14. Plug-type connection according to Claim 13,
**characterised in**
**that** the spring tongues (15) start from a substantially hollow cylindrical, paraxially extending support part (13) of the spring lock washer (14), and that the support part (13) is anchored in the retaining element (4).

15. Plug-type connection according to Claim 13 or 14,
**characterised in**
**that** the spring lock washer (14) consists of spring steel sheet.

16. Plug-type connection according to any one of Claims 13 to 15,
**characterised in**
**that** the retaining element potion (6) which is located between spring tongues (15) and the insertion end of the retaining element (4) is enlarged in its internal cross section in order to accommodate a hollow cylindrical unlocking sleeve (19) which is axially displaceable therein and has an inside diameter corresponding to the outside diameter of the plain-ended pipe (18), that the unlocking sleeve (19) projects beyond the end of the hose on the outside with one of its ends (20), and that the spring tongues (15) can be pivoted radially outwards by the other end (21) of the unlocking sleeve (19) when the latter is axially displaced.

17. Plug-type connection according to any one of the preceding Claims,
**characterised in**
**that** the retaining element (4) or one end (20) of the unlocking sleeve (19) has a collar (24, 35) which extends radially outwards and is at an axial spacing from the end of the hose.

18. Plug-type connection according to Claim 16 or 17,
**characterised in**
**that** the unlocking sleeve (19) has next to its other end (21) a detent lug (22) which protrudes radially outwards, and the retaining element portion (6) has a recess (23) adapted to the lug and extending up to the spring tongues (15).

19. Plug-type connection according to Claim 18,
**characterised in**
**that** the detent lug (22) and the recess (23) are formed in circulating fashion.

20. Plug-type connection according to one or more of Claims 1 to 19,
**characterised in**
**that** the retaining element (4, 30) and optionally the unlocking sleeve (19) consist of plastics.

21. Plug-type connection according to one or more of Claims 1 to 19,
**characterised in**
**that** at least the retaining element (4, 30) consists of special steel or brass.

22. Plug-type connection according to one or more of Claims 1 to 21,
**characterised in**
**that** the sealing ring which is mounted upstream of the retaining element (4, 30) is an O-ring.

23. Plug-type connection according to one or more of Claims 1 to 22,
**characterised in**
**that** a stop ring for the plain-ended pipe (18) is mounted upstream of the sealing ring (26) in the direction of the hose (1), and that the stop ring is inserted from inside in a corrugation of the hose (1) which is located next to the sealing ring.

## Revendications

1. Liaison par emboîtement entre un tuyau souple ondulé et un tuyau lisse, sachant qu'un élément de fixation entourant le tuyau lisse est au moins relié indirectement à l'extrémité du tuyau souple et que l'extrémité du tuyau lisse est ceinte par au moins une bague d'étanchéité située en amont de l'élément de fixation en direction du tuyau souple, laquelle bague est quant à elle reliée au moins indirectement au tuyau souple de manière à réaliser l'étanchéité, **caractérisée en ce que** l'élément de fixation (4, 30) est placé dans l'extrémité du tuyau souple et est maintenu par cette dernière au moins dans la direction axiale par au moins une liaison par engagement positif mutuelle, et **en ce que** la bague d'étanchéité (26) est logée dans une ondulation (25) du tuyau souple (1) située à côté de l'élément de fixation (4, 30).

2. Liaison par emboîtement selon la revendication 1, **caractérisée en ce que** l'élément de fixation (4, 30) présente un profil extérieur essentiellement ondulé complémentaire aux ondulations (7 à 9) du tuyau souple (1).

3. Liaison par emboîtement selon la revendication 2, **caractérisée en ce que** la partie de l'extrémité du tuyau associée à l'élément de fixation (4, 30) est étirée afin d'aplatir les ondulations (7 à 9) du tuyau souple.

4. Liaison par emboîtement selon l'une des revendications 1 à 3, **caractérisée en ce que** l'extrémité du tuyau est engagée par pression sur l'élément de fixation (4, 30).

5. Liaison par emboîtement selon l'une des revendications 1 à 3, **caractérisée en ce que** l'élément de fixation est une pièce moulée par injection dans l'extrémité du tuyau.

6. Liaison par emboîtement selon l'une des revendications 1 à 3, **caractérisée en ce que** l'élément de fixation présente une entaille longitudinale formant une fente parallèle à l'axe et est introduit dans l'extrémité du tuyau souple en réduisant de façon élastique sa section transversale de la largeur de la fente, avant d'y être immobilisé en augmentant sa section transversale par retour élastique.

7. Liaison par emboîtement selon l'une des revendications 1 à 3, **caractérisée en ce que** l'élément de fixation est composé de deux coupes de fixation séparées l'une de l'autre parallèlement à l'axe, la largeur de la fente de séparation étant dimensionnée de telle manière que les coupes de fixation puissent être introduites au moins l'une après l'autre dans l'extrémité du tuyau souple.

8. Liaison par emboîtement selon l'une des revendications 1 à 4, **caractérisée en ce que** l'élément de fixation, après son introduction dans l'extrémité du tuyau souple, se lie par engagement positif à ce dernier en s'élargissant radialement.

9. Liaison par emboîtement selon l'une des revendications 1 à 8, **caractérisée en ce que** de la colle vient compléter la liaison par engagement positif entre l'extrémité du tuyau souple et l'élément de fixation (4, 30).

10. Liaison par emboîtement selon l'une des revendications 1 à 8, **caractérisée en ce que** l'élément de fixation (30) présente, à partir d'un segment annulaire axial (31) fermé sur le pourtour et logé dans l'extrémité du tuyau souple, des doigts de fixation (32) uniformément répartis sur le pourtour, qui s'étendent axialement en direction du tuyau souple (1), afin d'immobiliser par friction l'extrémité du tuyau lisse.

11. Liaison par emboîtement selon la revendication 10, **caractérisée en ce que** les doigts de fixation (32) sont mobiles radialement avec une certaine élasticité et sont réalisés de manière à ce que leurs extrémités soient inclinées radialement vers l'intérieur.

12. Liaison par emboîtement selon la revendication 10, **caractérisée en ce que** le diamètre intérieur ceint par les doigts de fixation (32) à l'état détendu est inférieur d'une valeur prédéfinie au diamètre extérieur de l'extrémité du tuyau lisse, afin de créer des forces de maintien suffisantes.

13. Liaison par emboîtement selon l'une des revendications 1 à 8, **caractérisée en ce que** l'élément de fixation (4) renferme une rondelle ressort (14) comportant des languettes à ressort (15) s'étendant en biais radialement vers l'intérieur, en direction du tuyau souple (1), qui sont uniformément réparties sur le pourtour, et **en ce que** la section transversale délimitée par les extrémités libres (16) des languettes à ressort (15) est inférieure à la section transversale extérieure du tuyau lisse (18).

14. Liaison par emboîtement selon la revendication 13, **caractérisée en ce que** les languettes à ressort (15) partent d'une partie porteuse (13) essentiellement cylindrique et creuse de la rondelle-ressort (14), qui s'étend parallèlement à l'axe, et **en ce que** la partie porteuse (13) est ancrée dans l'élément de fixation (4).

15. Liaison par emboîtement selon la revendication 13 ou 14, **caractérisée en ce que** la rondelle-ressort (14) est constituée de tôle d'acier à ressort.

16. Liaison par emboîtement selon l'une des revendications 13 à 15, **caractérisée en ce que** le segment (6) de l'élément de fixation qui est situé entre les languettes à ressort (15) et l'extrémité de l'élément de fixation (4) située du côté de l'introduction présente un agrandissement de sa section transversale intérieure afin de pouvoir recevoir une douille de déverrouillage (19) cylindrique creuse qui y est mobile axialement et dont le diamètre intérieur correspond au diamètre extérieur du tuyau lisse (18), **en ce que** la douille de déverrouillage (19) dépasse de l'extrémité du tuyau souple vers l'extérieur avec l'une de ses extrémités (20), et **en ce que**, grâce à l'autre extrémité (21) de la douille de déverrouillage (19), les languettes à ressort (15) peuvent pivoter radialement vers l'extérieur à l'occasion d'un déplacement axial de ladite douille de déverrouillage.

17. Liaison par emboîtement selon l'une des revendications précédentes, **caractérisée en ce que** l'élément de fixation (4) ou l'une des extrémités (20) de la douille de déverrouillage (19) présente un épaulement (24, 35) s'étendant radialement vers l'extérieur et distant axialement de l'extrémité du tuyau souple.

18. Liaison par emboîtement selon la revendication 16 ou 17, **caractérisée en ce que** la douille déverrouillage (19) présente à côté de son autre extrémité (21) une saillie d'enclenchement (22) faisant saillie radialement vers l'extérieur et le segment (6) de l'élément de fixation, un évidement complémentaire (23) s'étendant jusqu'aux languettes à ressort (15).

19. Liaison par emboîtement selon la revendication 18, **caractérisée en ce que** la saillie d'enclenchement (22) et l'évidement (23) sont réalisés circulaires.

20. Liaison par emboîtement selon l'une ou plusieurs des revendications 1 à 19, **caractérisée en ce que** l'élément de fixation (4, 30) et le cas échéant la douille de déverrouillage (19) sont en matière plastique.

21. Liaison par emboîtement selon l'une ou plusieurs des revendications 1 à 19, **caractérisée en ce qu'**au moins l'élément de fixation (4, 30) est en acier fin ou en laiton.

22. Liaison par emboîtement selon l'une ou plusieurs des revendications 1 à 21, **caractérisée en ce que** la bague d'étanchéité située en amont de l'élément de fixation (4, 30) est un joint torique d'étanchéité.

23. Liaison par emboîtement selon l'une ou plusieurs des revendications 1 à 22, **caractérisée en ce qu'**une bague de butée pour le tuyau lisse (18) est placée en amont de la bague d'étanchéité (26) en direction du tuyau souple (1), et **en ce que** la bague de butée est logée de l'intérieur dans une ondulation du tuyau souple (1) qui est située à côté de la bague d'étanchéité.
